# EUROPÄISCHE PATENTANMELDUNG

(11) **EP 0 614 750 A1**
(43) Veröffentlichungstag der Anmeldung: **14.09.1994**
(21) Anmeldenummer: 94102991.0
(22) Anmeldetag: 28.02.1994
(51) Int. Cl.: B29C 65/00, B29C 67/14, B32B 31/04

(54) **Verfahren zum Herstellen eines Formteils grosser Dicke durch Verpressen faserigen Materials sowie nach diesem Verfahren hergestelltes Formteil**

(30) Priorität: 06.03.1993 DE 4307057
(71) Anmelder: HOECHST AKTIENGESELLSCHAFT, D-65929 Frankfurt am Main (DE)
(72) Erfinder: Borger, Heinz-Werner, D-86399 Bobingen (DE); Knobloch, Peter, D-86845 Grossaitingen (DE)

(57) **Zusammenfassung**

Zum Herstellen eines Formteils relativ großer Dicke werden zunächst mehrere flache Formkörper in der Weise hergestellt, daß ein faseriges Material mit einem Kleber vermischt und unter gegenüber Atmosphärenbedingungen erhöhtem Druck und erhöhter Temperatur bis zum Abbinden des Klebers in einer Form gehalten wird. Anschließend werden die flachen Formkörper unter Einsatz eines kaltwirkenden Klebers zu dem fertigen, mehrschichtigen Formteil verpreßt.

## Beschreibung

Die vorliegende Erfindung betrifft ein Verfahren zum Herstellen eines Formteils bei dem ein flacher Formkörper hergestellt wird, indem ein faseriges Material mit einem Kleber vermischt und das Gemisch unter gegenüber Atmosphärenbedingungen erhöhtem Druck und erhöhter Temperatur bis zum Abbinden des Klebers in einer Form gehalten wird, und ein nach diesem Verfahren hergestelltes Formteil sowie seine Verwendung.

Ein derartiges Verfahren zum Herstellen eines Formteils ist beispielsweise in der EP-B-0 160 270 beschrieben. Dort werden als faseriges Material Reißwolle, Holzspäne und gerissene Papierabfälle genannt, mit besonderem Vorteil auch Abfälle aus der Verarbeitung von Kunstfasern, insbesondere Polyesterfasern. Im Beispiel dieser Patentschrift wird auch Reißwolle aus Polyester Spunbond-Abfällen, also ein zerrissenes Spinnvlies, genannt.

Verfahren der eingangs angegebenen Art werden ferner in den nicht vorveröffentlichten deutschen Patentanmeldungen P 42 16 128, P 42 27 033 und P 42 27 034 beschrieben. Bei diesen Verfahren wird als faseriges Material ein Gemisch aus einem im wesentlichen feinfaserigen Material auf der Basis von Synthesefasern und aus kurzgeschnittenen Monofilamenten oder im wesentlichen geschnittene, gehäckselte und/oder gerissene synthetische Monofilamente oder zerkleinerte textile Abfälle, die bei Herstellung, Verarbeitung und/oder nach Gebrauch von Bekleidungs- und/oder Heimtextilien anfallen, eingesetzt.

Beschrieben werden in diesen Patentanmeldungen unter anderem der Einsatz einer Reinigungsstufe, der Einsatz pulveriger Schmelzkleber in Form von Thermoplasten, der Einsatz einer möglichst geringen Klebermenge zur Erzielung erneuter Recyclebarkeit, die Belegung des Formteils mit mindestens einer Schicht aus wasserdichtem und wasserdampfdurchlässigem Material, eine beidseitige Oberflächenbelegung, um die Steifigkeit des Produktes zu erhöhen, eine Produktstabilisierung im Inneren, beispielsweise durch Gewebe oder Gelege, zusätzlich die Vermittlung wasserabstoßender Eigenschaften, einer besonderen Oberflächenstruktur und besondere Oberflächeneigenschaften sowie eine Kombination von Eigenschaften derart, daß das Produkt mechanisch belastbar ist und/oder als Isolations- und Dämmaterial eingesetzt werden kann.

Die Verwendung derartiger Verfahren führen zu einer Fülle von wünschenswerten Eigenschaften. Diese betreffen die Verwendung der genannten Reststoffe (Abfälle) und damit deren sinnvolle Verwertung, die erneute Recyclebarkeit derartiger Produkte sowie die Vielfalt der zu erzielenden Eigenschaften.

Das Verpressen des Gemisches aus faserigem Material und Kleber unter erhöhtem Druck und erhöhter Temperatur hat allerdings den Nachteil, daß die Dicke der auf diese Weise hergestellten Formteile begrenzt ist. Dies hängt damit zusammen, daß beim Verpressen ein Wärmefluß von außen in das Innere des Gemisches stattfinden muß, um den Kleber zu schmelzen. Dieser Wärmefluß ist naturgemäß auf eine gewisse Materialdicke beschränkt, so daß sich mit den vorbeschriebenen Verfahren normalerweise keine größere Dicke des Formteils als ca. 10 bis 15 mm erreichen läßt.

Der vorliegenden Erfindung liegt die Aufgabe zugrunde, ein Verfahren zum Herstellen eines Formteils relativ großer Dicke sowie ein nach diesem Verfahren hergestelltes Formteil zu schaffen.

Zur Lösung dieser Aufgabe ist das eingangs angegebene Verfahren dadurch gekennzeichnet, daß mindestens ein zweiter flacher Formkörper hergestellt wird, indem ein faseriges Material mit einem Kleber vermischt und das Gemisch unter gegenüber Atmosphärenbedingungen erhöhtem Druck und erhöhter Temperatur bis zum Abbinden des Klebers in einer Form gehalten wird, und daß dann die flachen Formkörper unter Einsatz eines kaltwirkenden Klebers zu dem fertigen Formteil verpreßt werden.

Gemäß der vorliegenden Erfindung werden somit zwei oder mehr in herkömmlicher Weise hergestellte flache Formkörper unter Einsatz eines Kaltklebers zu einem schichtartigen Aufbau miteinander verklebt. Auf diese Weise lassen sich Formteile beliebiger Dicke und somit entsprechend großer Steifigkeit herstellen. So können beispielsweise aus relativ dünnen Formkörpern einer Dicke von 5 bis 15 mm mehrschichtige Formteile einer Dicke von beispielsweise 15 bis 30 cm hergestellt werden.

Das mehrschichtige Formteil besitzt dann nicht nur die vorteilhaften Eigenschaften jedes der ihn bildenden dünnen Formkörper, sondern darüber hinaus auch eine erhöhte Biegesteifigkeit und mechanische Belastbarkeit. Die durch den Kaltkleber gebildeten inneren Klebeflächen wirken hierbei als zusätzlich stabilisierende Schicht.

Die Herstellung der dünnen flachen Formkörper kann in der gleichen Weise erfolgen, wie dies in den oben erwähnten Patentanmeldungen beschrieben ist. So wird die Mischung aus dem faserigen Material und dem Kleber entsprechend dem späteren flächenbezogenen Gewicht gleichmäßig flächig verteilt und in einer Presse auf eine Temperatur erhitzt, bei der der Kleber seine volle Wirksamkeit entfaltet. Durch den Abstand der Druckplatten der Presse wird die Dicke der entstehenden flachen Formkörper bestimmt. Der Druck der Presse wird aufgehoben, wenn der Kleber seine Klebkraft soweit entfaltet hat, daß nach der Druckentlastung keine nennenswerte Dickenänderung mehr auftritt. Bei Schmelzklebern ist dies unterhalb einer bestimmten Temperatur der Fall.

Als faseriges Material wird hierbei vorzugsweise ein feinfaseriges Material aus Synthesefasern oder ein Material aus geschnittenen, gehäckselten und/oder gerissenen synthetischen Monofilamenten oder ein Gemisch aus diesen Materialien eingesetzt.

Als feinfaseriges Material kommen hierbei Fasern eines Titers zwischen 1 und 10 dtex, insbesondere zwischen 2 und 5 dtex, in Frage. Als Monofilamente können geschnittene Monofilamente, mehrfach geschnittene, gehäckselte und/oder gerissene Gewebe, Gewirke, Gestricke, Gelege, Geflechte aus Monofilamenten oder Mischungen aus diesen eingesetzt werden. Die Querschnittsfläche der eingesetzten Monofilamente beträgt mindestens 0,01 mm, die Schnittlänge bevorzugt 3 bis 30 mm und das Verhältnis von Länge zu Durchmesser mindestens 3. Die Plättchenfläche der zerkleinerten monofilen Flächengebilde kann 0,1 bis 1 cm² betragen, und abgeleitet von textilen Flächengebilden kann das Flächengewicht bei 50 bis 2000 m² liegen.

Ferner können als faseriges Material zerkleinerte textile Abfälle, die bei Herstellung, Verarbeitung und/oder nach Gebrauch von Bekleidungs- und/oder Heimtextilien anfallen, eingesetzt werden. Vorzugsweise werden als textile Abfälle bewährte textile Mischungen ausgewählt, wie z.B. Polyester/Baumwolle 65%/35%, Polyester/Wolle 55%/45%, Acryl/Wollmischungen, 100% Polyester, 100% Baumwolle, 100% Wolle, 100% Acryl und 100% Viskose.

Als Kleber zum Herstellen der flachen Formkörper wird vorzugsweise ein pulverförmiger Schmelzkleber auf der Basis eines Copolymerisats aus Vinylester und mindestens einem weiteren Vinylmonomeren eingesetzt. Der Anteil des Schmelzklebers in jedem der flachen Formkörper beträgt weniger als 10 Gew.-%, vorzugsweise 3 bis 5 Gew.-%. Der geringe Anteil der Klebermenge erlaubt eine erneute Recyclebarkeit des Formteils.

Zur Herstellung des mehrschichtigen Formteils werden die in der beschriebenen Weise hergestellten dünnen Formkörper auf ihren miteinander zu verbindenen Seiten mit dem kaltwirkenden Kleber versehen, vorzugsweise flächig bestrichen. Anschließend werden sie aufeinandergelegt und miteinander verpreßt. Der zu verwendende Kaltkleber wird unter den bekannten Kaltklebern unter Berücksichtigung seiner Haftung an den Formkörpern, seiner chemischen Verträglichkeit mit den Formkörpern sowie seiner erzielbaren Klebkraft ausgewählt. Darüber hinaus bestehen keine grundsätzlichen Einschränkungen hinsichtlich des verwendeten Kaltklebers.

Vorzugsweise ist jedoch vorgesehen, daß daß Kleber eingesetzt werden, die dem Formteil zusätzliche Eigenschaften wie eine Verbesserung der Wärmestandfestigkeit, eine günstige Beeinflussung des Brandverhaltens und/oder wasserabstoßende Eigenschaften verleihen.

Gemäß einer Möglichkeit werden zum Herstellen des mehrschichtigen Formteils untereinander identische flache Formkörper verwendet. Häufig besitzen die flachen Formkörper aufgrund der Herstellungsart eine in sich ungleichförmige Struktur. In diesem Fall werden vorzugsweise zwei identische flache Formkörper so gegeneinander gelegt, daß ein symmetrischer Aufbau entsteht.

Gemäß einer anderen Möglichkeit ist vorgesehen, daß zum Herstellen des mehrschichtigen Formteils unterschiedliche flache Formkörper hergestellt werden, um den Schichten des mehrschichtigen Formteils unterschiedliche Eigenschaften zu verleihen. Je nach Anwendungszweck kann beispielsweise der die Außenschicht bildende Formkörper für eine gewünschte Oberflächenstruktur verantwortlich sein, während der oder die innenliegenden flachen Formkörper beispielsweise eine hohe Festigkeit und/oder wärme- oder schallisolierende Eigenschaften des fertigen Formteils sicherstellen.

In weiterer Ausgestaltung der Erfindung ist vorgesehen, daß die Oberfläche des Formteils ein- oder beidseitig mit einer Schicht aus einem Material belegt wird, das den optischen Eindruck oder andere Eigenschaften des Formteils wie Wasserdichtigkeit, Steifigkeit und Abrieb beeinflußt. Die Oberflächenbelegung kann auch mit textilen Produkten, wie insbesondere mit zerkleinerten textilen Abfällen erfolgen, die bei Herstellung, Verarbeitung und/oder nach Gebrauch von Bekleidungs- und/oder Heimtextilien anfallen. Auch ist eine Oberflächengestaltung durch Aufsprühen eines die Oberflächenstruktur und/oder die Oberflächeneigenschaften modifizierenden Stoffes, insbesondere eines Farbstoffes möglich, wobei das Aufsprühen auf mindestens eine der Oberflächen der flachen Formkörper und/oder des schichtartigen Formteils erfolgen kann.

Gemäß der vorliegenden Erfindung wird ferner ein Formteil geschaffen, das dadurch gekennzeichnet ist, daß es schichtweise aus unter Einsatz eines Kaltklebers miteinander verpreßten flachen Formkörpern zusammengesetzt ist, die jeweils aus einem verpreßten Gemisch aus faserigem Material und einem abgebundenen Heißkleber bestehen.

Das erfindungsgemäß hergestellte und ausgebildete mehrschichtige Formteil kann im einfachsten Fall Massivholz ersetzen, wenn es ausschließlich um Festigkeit, mechanische Belastung, Biege-Wechselbelastung und dergleichen geht.

Darüber hinaus läßt es sich auch dann einsetzen, wenn es zusätzlich hervorragende schallisolierende und thermischisolierende Eigenschaften besitzen soll. Mögliche Einsatzgebiete sind Maschinenbau und Bauwesen, vorzugsweise der Wohnungsbau, wo das erfindungsgemäß hergestellte und ausgebildete mehrschichtige Formteil zur Isolation und Dämmung eingesetzt wird, so daß sich bewährte textile Eigenschaftskombinationen im Bauwesen nutzen lassen.

Das mehrschichtige Formteil ist vorzugsweise als Platte ausgebildet, kann jedoch grundsätzlich auch eine andere Gestalt haben.

## Patentansprüche

1. Verfahren zum Herstellen eines Formteils, bei dem ein flacher Formkörper hergestellt wird, indem ein faseriges Material mit einem Kleber vermischt und das Gemisch unter gegenüber Atmosphärenbedingungen erhöhtem Druck und erhöhter Temperatur bis zum Abbinden des Klebers in einer Form gehalten wird, dadurch gekennzeichnet, daß mindestens ein zweiter flacher Formkörper hergestellt wird, indem ein faseriges Material mit einem Kleber vermischt und das Gemisch unter gegenüber Atmosphärenbedingungen erhöhtem Druck und erhöhter Temperatur bis zum Abbinden des Klebers in einer Form gehalten wird, und daß dann die flachen Formkörper unter Einsatz eines kaltwirkenden Klebers zu dem fertigen Formteil verpreßt werden.

2. Verfahren nach Anspruch 1, dadurch gekennzeichnet, daß die flachen Formkörper auf ihren miteinander zu verbindenden Seiten mit dem kaltwirkenden Kleber flächig belegt werden.

3. Verfahren nach Anspruch 1 oder 2, dadurch gekennzeichnet, daß als Kleber zum Herstellen der flachen Formkörper ein pulverförmiger Schmelzkleber, vorzugsweise auf der Basis eines Copolymerisats aus Vinylester und mindestens einem weiteren Vinylmonomeren, eingesetzt wird.

4. Verfahren nach Anspruch 3, dadurch gekennzeichnet, daß der Anteil des Schmelzklebers in jedem der flachen Formkörper weniger als 10 Gew.-%, vorzugsweise 3 bis 5 Gew.-%, beträgt.

5. Verfahren nach einem der vorhergehenden Ansprüche, dadurch gekennzeichnet, daß als faseriges Material ein feinfaseriges Material aus Synthesefasern oder ein Material aus geschnittenen, gehäckselten und/oder gerissenen synthetischen Monofilamenten oder ein Gemisch aus diesen Materialien eingesetzt wird.

6. Verfahren nach einem der vorhergehenden Ansprüche, dadurch gekennzeichnet, daß als faseriges Material zerkleinerte textile Reste eingesetzt werden, die bei Herstellung, Verarbeitung und/oder nach Gebrauch von Bekleidungs- und/oder Heimtextilien und/oder technische Textilien anfallen.

7. Verfahren nach einem der vorhergehenden Ansprüche, dadurch gekennzeichnet, daß zum Herstellen des mehrschichtigen Formteils zwei untereinander identische, flache Formkörper hergestellt werden, die in sich ungleichförmig sind, und daß dann die beiden flachen Formkörper so gegeneinander gelegt werden, daß ein symmetrischer Aufbau entsteht.

8. Verfahren nach einem der Ansprüche 1 bis 6, dadurch gekennzeichnet, daß zum Herstellen des mehrschichtigen Formteils flache Formkörper unterschiedlichen Aufbaues hergestellt werden, um den Schichten des mehrschichtigen Formteils unterschiedliche Eigenschaften zu verleihen.

9. Verfahren nach einem der vorhergehenden Ansprüche, dadurch gekennzeichnet, daß die Oberfläche des Formteils ein- oder beidseitig mit einer Schicht aus einem Material belegt wird, das den optischen Eindruck oder andere Eigenschaften des Formteils, wie Wasserdichtigkeit, Steifigkeit und Abrieb beeinflußt.

10. Verfahren nach einem der vorhergehenden Ansprüche, dadurch gekennzeichnet, daß Kleber eingesetzt werden, die dem Formteil zusätzliche Eigenschaften wie eine Verbesserung der Wärmestandfestigkeit, eine günstige Beeinflussung des Brandverhaltens und/oder wasserabstoßende Eigenschaften verleihen.

11. Formteil, dadurch gekennzeichnet, daß es schichtweise aus unter Einsatz eines Kaltklebers miteinander verpreßten flachen Formkörpern zusammengesetzt ist, die jeweils aus einem verpreßten Gemisch aus faserigem Material und einem abgebundenen Heißkleber bestehen.

12. Formteil nach Anspruch 11, dadurch gekennzeichnet, daß es eine hohe mechanische Festigkeit und/oder schallisolierende und/oder thermischisolierende Eigenschaften besitzt.

13. Formteil nach Anspruch 11 oder 12, dadurch gekennzeichnet, daß es die Form einer Platte hat.

14. Verwendung des Formteils nach einem der Ansprüche 11 bis 13 als Isolations- und Dämmaterial im Bauwesen.
